# EUROPÄISCHE PATENTSCHRIFT

(11) **EP 2 078 956 B1**
(45) Veröffentlichungstag und Bekanntmachung des Hinweises auf die Patenterteilung: **20.02.2013**
(21) Anmeldenummer: 09000320.3
(22) Anmeldetag: 13.11.1999
(51) Int. Cl.: G01N 22/00, G01N 22/04, G01N 23/04

(54) **Resonatorgehäuse für Mikrowellen**
Resonator housing for microwaves
Boîtier de résonateur pour micro-ondes

(30) Priorität: 26.11.1998 DE 19854550
(43) Veröffentlichungstag der Anmeldung: 15.07.2009
(62) Teilanmeldung aus: 99122633.3
(73) Patentinhaber: Hauni Maschinenbau Aktiengesellschaft, 21033 Hamburg (DE)
(72) Erfinder: Schröder, Dierk, Dr., 22399 Hamburg (DE); Hohenstein, Norbert, 21481 Lauenburg (DE); Schreiber, Peter, 21465 Reinbek (DE); Noack, Andreas, 21423 Drage (DE); Tobias, Jörg, 21423 Drage (DE)

(56) Entgegenhaltungen:
- EP-A1- 0 789 237
- EP-A2- 0 758 085
- EP-A2- 0 791 823
- CH-A5- 604 163
- DE-C1- 3 407 819
- FR-A1- 2 556 470
- US-A- 4 042 879
- US-A- 4 104 584
- US-A- 4 885 527
- US-A- 5 103 180
- US-A- 5 736 864
- HERRMANN R ET AL: "FEUCHTEMESSUNG MIT MIKROWELLEN-RESONATOREN" TECHNISCHES MESSEN TM, R.OLDENBOURG VERLAG. MUNCHEN, DE, Bd. 64, Nr. 11, 1. November 1997 (1997-11-01), Seiten 447-452, XP000738914 ISSN: 0171-8096

## Beschreibung

Die Erfindung betrifft ein von einem Strang der tabakverarbeitenden Industrie durchsetztes Resonatorgehäuse aus metallischem Material, dem Mikrowellen zwecks Erfassung der Masse und/oder der Feuchte des Strangmaterials zugeführt sind.

Unter einem Strang der tabakverarbeitenden Industrie wird ein umhüllter oder unumhüllter Strang aus rauchfähigem Material wie Schnittabak, Zigarillotabak, Zigarrentabak oder einem anderen rauchfähigem Material verstanden; unter diesem Ausdruck kann auch ein Strang aus einem Filtermaterial wie Celluloseacetat oder Papier verstanden werden.

Es ist, z. B. durch die EP 0791 823 A2, bekannt, zum Erfassen der Masse und/oder der Feuchte eines Tabakstranges, insbesondere eines aus mit Zigarettenpapier umhüllten Schnittabak bestehenden Zigarettenstranges, den Strang durch eine Meßkammer aus Metall (im folgenden "Resonatorgehäuse" genannt) zu führen, in der er von Mikrowellen beaufschlagt wird. Aus Veränderungen charakteristischer Werte der zugeführten Mikrowellen bei durch einen Strang durchsetztem Resonatorgehäuse und bei z. B. leerem Resonatorgehäuse kann durch besondere Auswertschaltungen auf die Masse und/oder Feuchte je Längeneinheit des Stranges geschlossen werden.

DE 3407819 offenbart ein Verfahren zur Messung der Feuchtigkeit von Rauchmaterialien, insbesondere fertige rauchbare Artikel wie Filterstäbe.

Die Vorrichtung gemäß DE 3407819 umfasst einen Mikrowellengenerator 12, eine Koaxial-Leitung 22, sowie eine Koaxial-Leitung 26 für eine Bezugsstrecke und eine Koaxial-Leitung 36 für eine Maßstrecke, wobei die Bezugsstrecke ein Übergangsstück 28 und die Maßstrecke ein Übergangsstück 38 enthalten.

Die der Erfindung zugrundeliegende Aufgabe besteht in einer Verbesserung von Resonatorgehäusen gemäß dem Stand der Technik in verschiedener Hinsicht zwecks Erhöhung der Meßgenauigkeit und/oder Meßempfindlichkeit.

Die Aufgabe wird durch ein Verfahren nach Anspruch 1 und ein Resonatorgehäuse nach Anspruch 2 gelöst.

Eine besonders vorteilhafte Realisierung der Erfindung besteht darin, als Material mit niedrigem Temperaturausdehnungskoeffizienten eine Legierung vorzusehen, die aus ca. 64 % Eisen und ca. 36 % Nickel besteht. Die Legierungsbestandteile können aber auch um die genannten Werte herum variieren, solange nur der Temperaturausdehungskoeffizient niedrig genug ist, daß die mechanischen Verformungen bei Temperaturschwankungen nicht so hoch werden, daß sie das Meßergebnis unzulässig verfälschen. Unter dieser Bedingung können auch weitere Legierungsbestandteile vorgesehen sein.

Gemäß der Erfindung, weist das Resonatorgehäuse eine Temperaturregelanordnung auf, die seine Arbeitstemperatur zumindest annähernd konstant hält. Die Temperaturregelanordnung weist einen Fühler für die Temperatur des Resonatorgehäuses auf, der einen Transistor derart steuert, daß dessen Verlustwärme die Temperatur des Gehäuses zumindest annähernd konstant hält.

Der Innenraum des Resonatorgehäuses hat die Form eines symmetrischen Hohlkörpers, vorzugsweise eines Hohlzylinders, der durch ein betriebsmäßig entfernbares Verschlußelement verschließbar ist. Die Form des Innenraums kann von der exakten Form eines Hohlzylinders abweichen. Vorteilhaft ist aber auch dann eine zumindest annähernd symmetrische Form, z. B. eine Polygonform.

In weiterer vorteilhafter Ausgestaltung der Erfindung sind die Wände des Innenraumes des Resonatorgehäuses zumindest teilweise mit einem korrosionsbeständigen Material beschichtet oder sie bestehen aus derartigem Material. Bevorzugt wird ein Metall verwendet, das elektrisch gut leitend ist. Beide Forderungen werden durch Gold erfüllt, das entweder zumindest weitgehend rein oder in einer geeigneten Legierung verwendet werden kann. Reingold eignet sich zum Beschichten des Innenraumes, weil schon sehr dünne Schichten für den erstrebten Zweck der Korrosionsbeständigkeit und der elektrischen Leitfähigkeit ausreichen. Vorteilhaft werden gemäß der Erfindung auch die Außenwände des Resonatorgehäuses mit korrosionsbeständigem Material versehen, z. B. vergoldet, um Korrosion hintanzuhalten.

In weiterer vorteilhafter Ausgestaltung der Erfindung ist ein geschlossenes den Strang umgebendes Schutzrohr vorgesehen. Das Schutzrohr besteht vorteilhaft zumindest teilweise aus einem Kunststoff, insbesondere der Polyaryletherketon-Gruppe (PEAK-Gruppe), insbesondere aus Polyetheretherketon (PEEK). Das Schutzrohr kann im Einlaufbereich des Stranges erweitert sein.

Das Resonatorgehäuse kann sich gemäß der Erfindung außerhalb des Innenraumes (Resonatorraum) nach außen in Richtung des Stranges zwecks Verhinderung des Austritts von Mikrowellen fortsetzen. Das Resonatorgehäuse kann sich auch innerhalb des Innenraumes (Resonatorraum) nach innen in Richtung des Stranges fortsetzen.

Das Resonatorgehäuse gemäß der Erfindung eignet sich besonders bei einer Meßanordnung mit einer Zufuhr der Mikrowellen mit mindestens zwei unterschiedlichen Frequenzen von einem Generator zu dem Resonatorgehäuse und durch eine Resonanzfrequenz-Verschiebungen durch Vergleich der von dem Strang beeinflußten Resonanzkurve gegenüber der von dem Strang unbeeinflußten Resonanzkurve sowie die Dämpfung durch Vergleich der Amplituden der von dem Strang beeinflußten und unbeeinflußten Resonanzkurven erfassende Schaltungsanordnung.

Eine weitere vorteilhafte Weiterbildung der Erfindung besteht darin, daß dem Resonator Mikrowellen von zwei Frequenzen zugeführt werden, die beide einer abfallenden Flanke der Resonanzkurve zugeordnet sind.

### Bestimmte Weiterbildungen der Erfindung weisen zahlreiche Vorteile auf:

Das Resonatorgehäuse aus Material mit extrem geringem Temperaturausdehnungskoeffizienten verändert seine Form bei wechselnden Temperaturen sehr wenig. Hierzu kann auch die Temperaturregelung beitragen. Die Folge ist eine sehr gute Konstanz der Resonatoreigenschaften, was der Genauigkeit und Konstanz der Meßwerterfassung zugute kommt.

Die Verwendung von korrosionsbeständigem Material wie Gold für die Beschichtung des Innenraums des Resonatorgehäuses verhindert Korrosion und dadurch ausgelöste Änderungen der Resonatoreigenschaften. Infolge der guten elektrischen Leitfähigkeit dieses Beschichtungsmaterials werden negative Einflüsse durch den sogenannten Skin-Effekt weitgehend hintangehalten.

Das Resonatorgehäuse ist für die Mikrowellenzufuhr und die Umwandlung der Mikrowellensignale in Meßsignale gemäß der Erfindung besonders geeignet.

Die Erfindung wird anhand eines Ausführungsbeispiels näher erläutert.

Ein teilweise aufgebrochener in Richtung des Pfeils 5 bewegter Zigarettenstrang 1, bestehend aus einem Füller 2 aus Schnittabak und einer Umhüllung 3 aus Zigarettenpapier, durchsetzt ein Resonatorgehäuse 4, dem Mikrowellen zwecks Erfassung der Masse und/oder Feuchte des Füllers zugeführt werden. Das Resonatorgehäuse 4 weist einen Hohlkörper in Form eines Hohlzylinders 6 auf, dessen Innenraum 7 symmetrisch zu dem Zigarettenstrang 1 angeordnet ist. An ihm ist ein Deckel 8 zum Verschließen angeschraubt. Sowohl Hohlzylinder 6 als auch Deckel 8 bestehen aus Material mit einem sehr niedrigen Temperaturausdehungskoeffizienten. Hierzu eignet sich eine Legierung, die zumindest annähernd aus 64 % Eisen und 36 % Nickel besteht. Infolge der guten Konstanz der Geometrie des Resonatorgehäuses 4 läßt sich auch eine gute Konstanz der Meßergebnisse erreichen. Hierzu trägt noch eine Regelung der Temperatur des Resonatorgehäuses bei, dessen Temperatur durch einen Temperaturfühler 9 erfaßt wird. Der Temperaturfühler steuert mindestens einen Heiztransistor 11, z. B. vom Typ BUZ 80 der Fa. Siemens, dessen Verlustwärme das Resonatorgehäuse über Umgebungstemperatur erwärmt. Die Steuerung durch den Temperaturfühler erfolgt derart, daß die Temperatur des Gehäuses 4 zumindest weitgehend konstant gehalten wird.

Der Innenraum 7 des Resonatorgehäuses 6 ist mit einer dünnen Goldschicht 12 bedampft, die eine die Meßwertkonstanz beeinträchtigende Korrosionsbildung zuverlässig verhindert und gleichzeitig, da elektrisch gut leitend, einen schädlichen Skin-Effekt verhindert. Zweckmäßig wird das Resonatorgehäuse 4 auch von außen vergoldet, um auch äußere Korrosion auszuschließen.

Zum mechanischen Abschluß des Innenraums 7 gegenüber dem Zigarettenstrang 1 und von diesem eventuell angeförderten Schmutzteilchen, also zwecks Verhinderung einer Verschmutzung des Innenraums 7, die das Meßergebnis beeinträchtigen würde, dient ein Schutzrohr 13, das vorteilhaft aus einer Substanz der Polyaryletherketon(PAEK)-Gruppe, z. B. aus Polyetheretherketon (PEEK) besteht. An einem seiner Enden 13a, an dem der Strang 1 in das Resonatorgehäuse 6 einläuft, ist das Schutzrohr 13 trichterförmig aufgeweitet.

Das Resonatorgehäuse 4 erstreckt sich außerhalb des Innenraums 7 rohrförmig (6a, 8a) auf beiden Seiten in Richtung des Strangs 1 nach außen, um den Austritt von Mikrowellen aus der Resonatorkammer zu verhindern. Es kann sich auch rohrförmig (6b, 8d) etwas nach innen erstrecken. Zur Einkopplung der von einem Mikrowellengenerator erzeugten Mikrowellen dient eine durch einen Isolierring 14 vom Metallgehäuse 6 isolierte Antenne 16. Zum Auskoppeln von Mikrowellen, die einer nicht dargestellten Auswertschaltung zugeführt werden sollen, dient eine durch eine Isolierung 17 isolierte Antenne 18. Eine geeignete Auswertschaltung ist der deutschen Patentanmeldung 197 34 978.1 zu entnehmen.

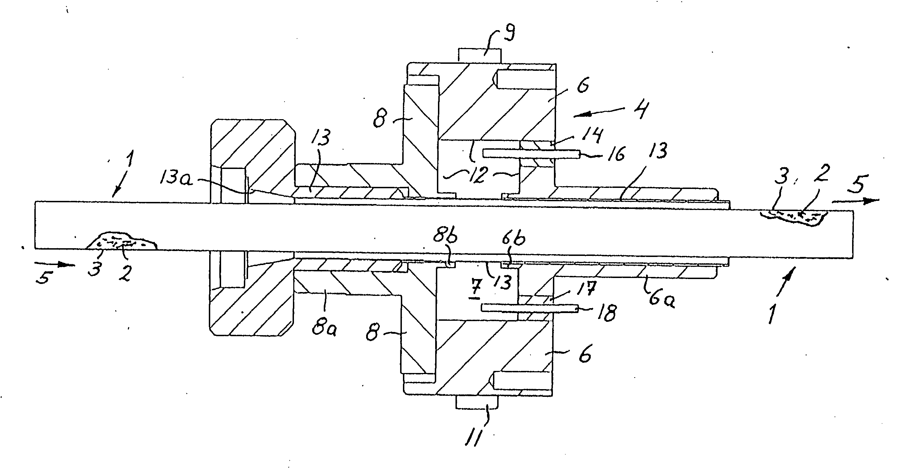

## Patentansprüche

1. Verfahren zum Erfassen der Masse und/oder der Feuchte eines Stranges (1) der tabakverarbeitenden Industrie, bei welchem der Strang (1) durch ein Resonatorgehäuse (4) aus metallischem Material bewegt wird, wobei dem Resonatorgehäuse (4) Mikrowellen zwecks Erfassung der Masse und/oder Feuchte des Strangmaterials zugeführt werden, **dadurch gekennzeichnet, dass** die Arbeitstemperatur des Resonatorgehäuses (4), welches eine Temperaturregelanordnung aufweist, durch einen Temperaturfühler (9) erfasst und durch eine Temperaturregelung auf einem zumindest weitgehend konstanten Wert gehalten wird, wobei die Arbeitstemperatur des Resonatorgehäuses (4) auf einem Wert gehalten wird, welcher über der Umgebungstemperatur liegt, wobei das Resonatorgehäuse (4) durch Verlustwärme eines Transistors (11) erwärmt und die Verlustwärme durch den Temperaturfühler (9) gesteuert wird, wobei zur Einkopplung der von einem Mikrowellengenerator erzeugten Mikrowellen eine durch einen Isolierring (14) vom Resonatorgehäuse isolierte Antenne (16) und zum Auskoppeln von Mikrowellen, welche einer Auswerteschaltung zugeführt werden, eine durch eine Isolierung (17) isolierte Antenne (18) dient.

2. Von einem Strang (1) der tabakverarbeitenden Industrie durchsetzbares Resonatorgehäuse (4) aus metallischem Material, dem Mikrowellen zwecks Erfassung der Masse und/oder der Feuchte des Strangmaterials (2, 3) zuführbar sind, **dadurch gekennzeichnet, dass** der Innenraum des Resonatorgehäuses (4) die Form eines symmetrischen Hohlkörpers (6), insbesondere eines Hohlzylinders oder eine von der exakten Form eines Hohlzylinders abweichende Form, aufweist, an welchem ein Temperaturfühler (9) für die Arbeitstemperatur des eine Temperaturregelanordnung und einen Transistor (11) aufweisenden Resonatorgehäuses (4) angeordnet ist und die Arbeitstemperatur des Resonatorgehäuses (4) durch den Temperaturfühler (9) erfasst und durch eine Temperaturregelung auf einem zumindest weitgehend konstanten Wert gehalten wird, welcher über der Umgebungstemperatur liegt, wobei das Resonatorgehäuse (4) durch Verlustwärme des Transistors (11) erwärmt wird und die Steuerung der Verlustwärme durch den Temperaturfühler (9) erfolgt.

3. Resonatorgehäuse nach Anspruch 2, **dadurch gekennzeichnet, dass** das Resonatorgehäuse (4) zumindest teilweise aus Material mit einem niedrigen Temperaturausdehnungskoeffizienten besteht, insbesondere zumindest teilweise aus einer Legierung, die ca. 64 % Eisen und ca. 36 % Nickel enthält.

4. Resonatorgehäuse nach einem oder mehreren der vorhergehenden Ansprüche 2 bis 3, **dadurch gekennzeichnet, dass** der Innenraum (7) des Resonatorgehäuses (4) die Form eines symmetrischen Hohlkörpers, vorzugsweise eines Hohlzylinders aufweist, der durch ein betriebsmäßig entfernbares und wieder anbringbares Verschlußelement (8) verschließbar ist.

5. Resonatorgehäuse nach einem oder mehreren der vorhergehenden Ansprüche 2 bis 4, **dadurch gekennzeichnet, dass** die Wände (12) des Innenraumes (7) des Resonatorgehäuses (4) zumindest teilweise mit einem korrosionsbeständigen, insbesondere elektrisch gut leitendem, Metall (12) beschichtet sind oder aus derartigem Material bestehen.

6. Resonatorgehäuse nach Anspruch 5, **dadurch gekennzeichnet, dass** die Außenfläche des Resonatorgehäuses (4) mit einem korrosionsbeständigen Metall beschichtet ist.

7. Resonatorgehäuse nach einem oder mehreren der Ansprüche 5 und 6, **dadurch gekennzeichnet, dass** das Beschichtungsmetall im wesentlichen aus Gold besteht oder zumindest Gold enthält.

8. Resonatorgehäuse nach einem oder mehreren der vorhergehenden Ansprüche 2 bis 7, **dadurch gekennzeichnet, dass** ein geschlossenes den Strang (1) umgebendes Schutzrohr (13) vorgesehen ist, welches vorzugsweise zumindest teilweise aus einem Kunststoff der Polyaryletherketon (PEAK)-Gruppe, insbesondere aus Polyetheretherketon (PEEK), besteht und/oder welches insbesondere im Einlaufbereich (13a) des Stranges (1) erweitert ist.

9. Resonatorgehäuse nach einem oder mehreren der vorhergehenden Ansprüche 2 bis 8, **dadurch gekennzeichnet, dass** das Resonatorgehäuse (4) sich außerhalb des Innenraumes (Resonatorraum 7) nach außen in Richtung des Stranges (1) zwecks Verhinderung des Austritts von Mikrowellen fortsetzt (6a, 8a) und/oder sich innerhalb des Innenraumes (Resonatorraum 7) nach innen in Richtung des Stranges (1) fortsetzt (6b, 8b).

10. Resonatorgehäuse nach einem oder mehreren der vorhergehenden Ansprüche 2 bis 9, **gekennzeichnet durch** eine Zufuhr von Mikrowellen mit mindestens zwei unterschiedlichen Frequenzen von einem Generator zu dem Resonatorgehäuse und **durch** eine Frequenz-Verschiebungen **durch** Vergleich der von dem Strang beeinflußten Resonanzkurve gegenüber der von dem Strang unbeeinflußten Resonanzkurve sowie die Dämpfung **durch** Vergleich der Amplituden der von dem Strang beeinflußten und unbeeinflußten Resonanzkurven erfassende Schaltungsanordnung.

11. Resonatorgehäuse nach Anspruch 10, **dadurch gekennzeichnet, dass** dem Resonator Mikrowellen von zwei Frequenzen zugeführt werden, die beide einer abfallenden Flanke der Resonanzkurve zugeordnet sind.

12. Resonatorgehäuse nach dem Oberbegriff des Anspruchs 2, **gekennzeichnet durch** ein geschlossenes, den Strang (1) umgebendes Schutzrohr (13), welches vorzugsweise zumindest teilweise aus einem Kunststoff der Polyaryletherketon (PEAK)-Gruppe, insbesondere aus Polyetheretherketon (PEEK), besteht und/oder welches insbesondere im Einlaufbereich (13a) des Stranges (1) erweitert ist.

## Claims

1. Method of detecting the mass and/or moisture of a rod (1) in the tobacco processing industry, whereby the rod (1) is moved through a resonator housing (4) made from metallic material, and microwaves are fed to the resonator housing (4) for the purpose of detecting the mass and/or moisture of the rod material, **characterised in that** the working temperature of the resonator housing (4), which has a temperature regulating arrangement, is detected by a temperature sensor (9) and maintained at an at least largely constant value by a temperature regulator, the working temperature of the resonator housing (4) being maintained at a value which lies above the ambient temperature, and the resonator housing (4) is heated by means of heat loss from a transistor (11) and the heat loss is controlled by the temperature sensor (9), and an antenna (16) insulated from the resonator housing by an insulation (14) is used to couple in the microwaves generated by a microwave generator and an antenna (18) insulated by an insulation (17) is used to couple out microwaves which are fed to an evaluation circuit.

2. Resonator housing (4) of metallic material through which a rod (1) can be fed in the tobacco processing industry, to which microwaves can be fed for the purpose of detecting the mass and/or moisture of the rod material (2, 3), **characterised in that** the interior of the resonator housing (4) has the shape of a symmetrical hollow body (6), in particular a hollow cylinder or a shape which deviates from the exact shape of a hollow cylinder, on which a temperature sensor (9) is disposed for detecting the working temperature of the resonator housing (4) incorporating a temperature control arrangement and a transistor (11), and the working temperature of the resonator housing (4) is detected by the temperature sensor (9) and is maintained at an at least largely constant value lying above ambient temperature by means of a temperature regulator, and the resonator housing (4) is heated by heat loss of the transistor (11) and the heat loss is controlled by the temperature sensor (9).

3. Resonator housing as claimed in claim 2, **characterised in that** the resonator housing (4) is at least partially made from material with a low coefficient of thermal expansion, in particular at least partially from an alloy containing approximately 64 % iron and approximately 36 % nickel.

4. Resonator housing as claimed in one of more of preceding claims 2 to 3, **characterised in that** the interior (7) of the resonator housing (4) has the shape of a symmetrical hollow body, preferably a hollow cylinder, which can be closed by a removable and re-mountable closure element (8) for operating purposes.

5. Resonator housing as claimed in one of more of preceding claims 2 to 4, **characterised in that** the walls (12) of the interior (7) of the resonator housing (4) are at least partially coated with a corrosion-resistant, in particular good electrically conductive, metal (12) or are made from such material.

6. Resonator housing as claimed in claim 5, **characterised in that** the external surface of the resonator housing (4) is coated with a corrosion-resistant metal.

7. Resonator housing as claimed in one or more of claims 5 and 6, **characterised in that** the coating metal is essentially gold or at least contains gold.

8. Resonator housing as claimed in one or more of preceding claims 2 to 7, **characterised in that** a closed protective tube (13) is provided surrounding the rod (1), which is preferably made at least partially from a plastic from the polyaryl ether ketone (PEAK) group, in particular polyether ether ketone (PEEK), and/or which is wider, in particular in the intake region (13a) of the rod (1).

9. Resonator housing as claimed in one or more of preceding claims 2 to 8, **characterised in that** the resonator housing (4) extends (6b, 8b) outwards from the interior (resonator chamber 7) in the direction of the rod (1) in order to prevent the escape of microwaves and/or extends (6a, 8a) inwards inside the interior (resonator chamber 7) in the direction of the rod (1).

10. Resonator housing as claimed in one or more of preceding claims 2 to 9, **characterised by** an intake of microwaves with at least two different frequencies from a generator to the resonator housing and by a circuit arrangement which detects frequency shifts by comparing the resonance curve affected by the rod with the resonance curve unaffected by the rod as well as damping by comparing the amplitudes of the resonance curves affected and unaffected by the rod.

11. Resonator housing as claimed in claim 10, **characterised in that** microwaves of two frequencies are fed to the resonator, both of which are assigned to a falling edge of the resonance curve.

12. Resonator housing as claimed in the introductory part of claim 2, **characterised by** a closed protective tube (13) surrounding the rod (1) which is preferably made at least partially from a plastic from the polyaryl ether ketone (PEAK) group, in particular polyether ether ketone (PEEK), and/or which is wider in particular in the intake region (13a) of the rod (1).

## Revendications

1. Procédé pour capter la masse et/ou l'humidité d'un boudin (1) de l'industrie de transformation du tabac, dans lequel le boudin (1) passe à travers un corps de résonateur (4) en matière métallique et dans lequel des micro-ondes sont injectées dans le corps de résonateur (4) pour capter la masse et/ou l'humidité de la matière du boudin, **caractérisé en ce que** la température de travail du corps de résonateur (4), qui présente un dispositif de régulation de la température, est captée par une sonde de température (9), et est maintenue à une valeur au moins largement constante par une régulation de la température, la température de travail du corps de résonateur (4) étant maintenue à une valeur supérieure à la température ambiante, le corps de résonateur (4) étant chauffé par la chaleur de dissipation d'un transistor (11) et la chaleur de dissipation étant commandée par un capteur de température (9), une antenne (16) isolée du boîtier du résonateur par une bague isolante (14) étant utilisée pour coupler en entrée les micro-ondes produites par un générateur de micro-ondes et une antenne (18) isolée par une isolation (17) étant utilisée pour découpler les micro-ondes, qui sont injectées dans un circuit d'analyse.

2. Corps de résonateur (4) en matière métallique, pouvant être traversé par un boudin (1) de l'industrie de transformation du tabac, dans lequel des micro-ondes peuvent être injectées pour capter la masse et/ou l'humidité de la matière du boudin (2, 3), **caractérisé en ce que** le volume intérieur du corps de résonateur (4) présente la forme d'un corps creux symétrique (6), en particulier d'un cylindre creux ou d'une forme qui diffère de la forme exacte d'un cylindre creux, au niveau duquel est disposé un capteur de température (9) pour la température de travail du corps de résonateur (4) qui comporte un dispositif de régulation de la température et un transistor (11), et la température de travail du corps de résonateur (4) est captée au moyen du capteur de température (9) et est maintenue par une régulation de la température à une valeur au moins largement constante qui est plus élevée que la température ambiante, le corps de résonateur (4) étant chauffé par la chaleur de dissipation du transistor (11) et la commande de la chaleur de dissipation étant effectuée par le capteur de température (9).

3. Corps de résonateur selon la revendication 2, **caractérisé en ce que** le corps de résonateur (4) est fait au moins en partie d'une matière à faible coefficient de dilatation thermique, en particulier au moins en partie d'un alliage qui contient environ 64 % de fer et environ 36 % de nickel.

4. Corps de résonateur selon une ou plusieurs des revendications précédentes 2 à 3, **caractérisé en ce que** le volume intérieur (7) du corps de résonateur (4) présente la forme d'un corps creux symétrique, de préférence d'un cylindre creux, qui peut être fermé par un élément de fermeture (8) pouvant être enlevé et remis en place dans le cadre du fonctionnement.

5. Corps de résonateur selon une ou plusieurs des revendications précédentes 2 à 4, **caractérisé en ce que** les parois (12) du volume intérieur (7) du corps de résonateur (4) sont au moins en partie revêtues ou composées d'un métal (12) résistant à la corrosion et en particulier bon conducteur de l'électricité.

6. Corps de résonateur selon la revendication 5, **caractérisé en ce que** la surface extérieure du corps de résonateur (4) est revêtue d'un métal résistant à la corrosion.

7. Corps de résonateur selon une ou plusieurs des revendications 5 et 6, **caractérisé en ce que** le métal de revêtement est essentiellement composé d'or ou au moins contient de l'or.

8. Corps de résonateur selon une ou plusieurs des revendications précédentes 2 à 7, **caractérisé en ce qu'**il est prévu un tube de protection fermé (13) qui entoure le boudin (1), qui est de préférence au moins en partie composé d'une matière plastique du groupe des polyaryléthercétones (PEAK), en particulier de polyétheréthercétone (PEEK), et/ou qui est évasé, en particulier dans la région d'entrée (13a) du boudin (1).

9. Corps de résonateur selon une ou plusieurs des revendications précédentes 2 à 8, **caractérisé en ce que** le corps de résonateur (4) se prolonge (6a, 8a) en dehors du volume intérieur (de la chambre du résonateur 7) vers l'extérieur dans la direction du boudin (1) pour empêcher la sortie des micro-ondes et/ou se prolonge (8a, 8b) à l'intérieur du volume intérieur (de la chambre du résonateur 7), vers l'intérieur dans la direction du boudin (1).

10. Corps de résonateur selon une ou plusieurs des revendications précédentes 2 à 9, **caractérisé par** l'injection, par le générateur, de micro-ondes comprenant au moins deux fréquences différentes dans le corps de résonateur, et par un circuit qui capte des décalages de fréquence en comparant la courbe de résonance influencée par le boudin à la courbe de résonance qui n'est pas influencée par le boudin, et qui capte l'amortissement en comparant les amplitudes des courbes de résonance influencée et non influencée par le boudin.

11. Corps de résonateur selon la revendication 10, **caractérisé en ce que** sont injectées dans le résonateur des micro-ondes de deux fréquences qui sont toutes deux associées à un flanc descendant de la courbe de résonance.

12. Corps de résonateur selon le préambule de la revendication 2, **caractérisé par** un tube de protection fermé (13) qui entoure le boudin (1) et qui est de préférence composé, au moins en partie, d'une matière plastique du groupe des polyaryléthercétones (PEAK), en particulier de polyétheréthercétone (PEEK), et/ou qui est évasé en particulier dans la région d'entrée (13a) du boudin (1).
